## Europäisches Patentamt
## European Patent Office
## Office européen des brevets

(11) Numéro de publication: **0 097 556**
**B1**

# (12) FASCICULE DE BREVET EUROPÉEN

(45) Date de publication du fascicule du brevet:
26.11.86

(51) Int. Cl.⁴: **B 65 G 5/00**

(21) Numéro de dépôt: **83401103.3**

(22) Date de dépôt: **01.06.83**

(54) Procédé et dispositif de stockage de gaz liquéfié à basse température dans une cavité souterraine.

(30) Priorité: **17.06.82 FR 8210566**

(43) Date de publication de la demande:
**04.01.84 Bulletin 84/1**

(45) Mention de la délivrance du brevet:
**26.11.86 Bulletin 86/48**

(84) Etats contractants désignés:
**BE DE GB IT NL SE**

(56) Documents cité:
**FR-A-1 278 379**
**FR-A-2 372 752**

(73) Titulaire: **Société Française de Stockage Géologique "GEOSTOCK", Tour Aurore - Cédex No 5, F-92080 Paris La Défense2 (FR)**
Titulaire: **Société DISTRIGAZ, 31, avenue des Arts, B-1040 Bruxelles (BE)**

(72) Inventeur: **Boulanger, Alain, 7 rue de l'Alboni, F-75016 Paris (FR)**

(74) Mandataire: **Pinguet, André, CAPRI 28 bis, avenue Mozart, F-75016 Paris (FR)**

EP 0 097 556 B1

LIBER, STOCKHOLM 1986

## Description

La présente invention concerne le stockage souterrain de produits maintenus à basse température dit stockage cryogénique et, notamment, le stockage d'hydrocarbures liquéfiés (connu du brevet FR-A- 2 372 752). L'intérêt est d'avoir en stockage un produit à la pression atmosphérique. La température est donc la température d'équilibre gaz/liquide à la pression normale, ce qui, pour les différents gaz de pétrole, va de -40 à - 196° C.

Divers procédés ont été proposés pour stocker des gaz liquéfiés, et en particulier des gaz liquéfiés à très basse température comme le gaz naturel, dans des cavités souterraines, l'étanchéité de celles-ci étant obtenue par le gel du sol. Le gaz liquéfié est alors à une pression voisine de la pression atmosphérique. Jusqu'ici ces procédés se sont heurtés à diverses difficultés, principalement liées à des fissures qui, soit existaient dans le sol avant le creusement de la cavité, soit apparaissaient au début ou au cours du fonctionnement de l'installation. Selon le cas, ces fissures entraînent des venues d'eau qu'on peut difficilement arrêter, surtout si elles n'apparaissent qu'après le début de la mise en froid, c'est-à-dire à un moment où une intervention n'est pas prévue ou bien des fuites de gaz vers la surface qui, elles aussi, ne sont généralement décelées qu'après le début de la mise en froid ou du fonctionnement de l'installation.

La présente invention a pour but de fournir un procédé et un dispositif pour le stockage de gaz liquéfié dans une cavité souterraine dont l'étanchéité est essentiellement obtenue par le gel du sol et dans lequel, pendant toute la durée de vie du stockage, les inconvénients dûs à des venues d'eau ou des fuites de gaz sont évités.

Dans les procédés connus, on observe les parois de la cavité et le massif environnant pendant la période de mise en froid de ladite cavité, avant le remplissage, et l'on intervient pendant cette période, en fonction de ces observations, en modifiant le programme initial de mise en froid et/ou en réparant les désordres qui sont apparus (voir par exemple le brevet FR 2 372 752).

Mais, on n'avait jamais pensé que la forme de la cavité pouvait avoir une influence sur la formation des fissures. Quand on a creusé des cavités spécialement en vue d'un tel stockage, on a déterminé la forme de la cavité en vue de l'opération de creusement, en vue d'y faciliter le travail, la circulation, l'enlèvement des déblais.

Pour des raisons de tenue du terrain, les dimensions de la cavité sont limitées par une hauteur de quelques mètres et, pour avoir le volume désiré, la cavité se présente sous la forme d'une galerie droite. Conformément à l'invention, la section de la cavité est sensiblement circulaire et les extrémités sont hémisphériques.

On sait que de nombreux réservoirs pour produits de toutes sortes ont des formes sphériques ou cylindriques avec extrémités arrondies. Mais, il s'agit dans ce cas de réservoirs métalliques dont les formes sont prévues, soit pour résister à une pression interne, soit pour résister à des contraintes de soudure, ou pour d'autres raisons. Mais en aucun cas, on avait imaginé jusqu'à maintenant que la forme de cavité souterraine prévue par la présente invention permettait d'éviter ou de réduire considérablement la formation de fissures dans un terrain pendant le refroidissement dudit terrain en-dessous du point de congélation de l'eau qui l'imprègne.

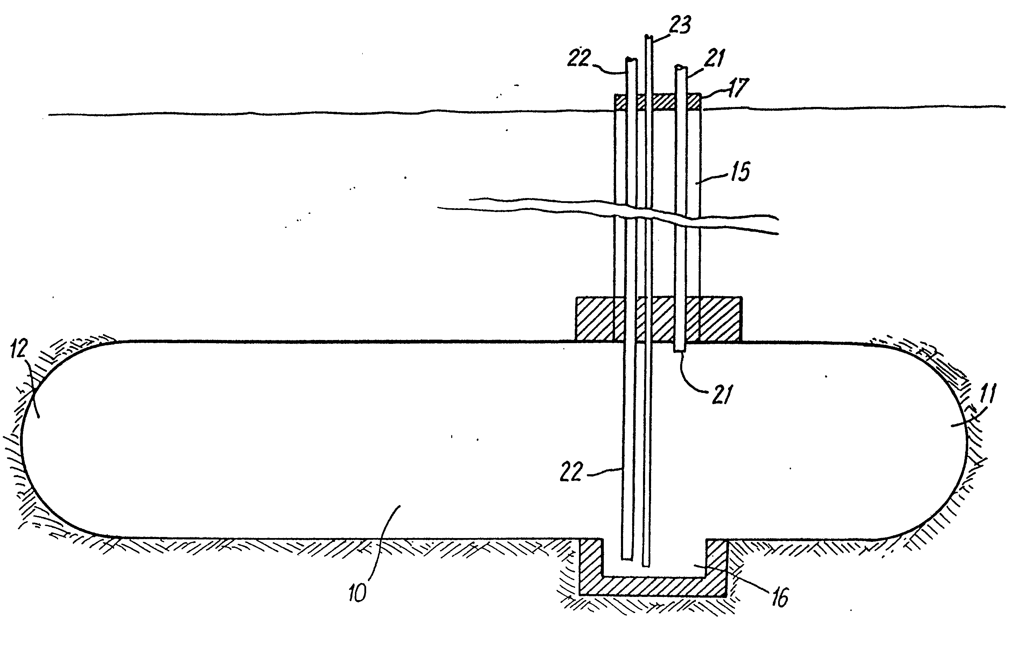

La figure unique du dessin ci-joint représente en coupe schématique une cavité de stockage selon l'invention.

La cavité 10 peut avoir une section circulaire ou sensiblement circulaire, avec des arrondis pouvant se raccorder par des segments droits. Les extrémités 11 et 12 sont hémisphériques. La cavité est raccordée à l'extérieur par un puits 15 et comporte un puisard 16. Le raccordement de la cavité au puits peut être réalisé par exemple conformément au dispositif du brevet français 8 201 447 des demanderesses. On a représenté à titre d'exemple trois conduites 21, 22, 23 s'étendant entre l'extérieur, émergeant du bouchon 17 du puits 15, et l'intérieur de la cavité 10. Le puits peut abriter aussi des tubes ou des câbles connectés à des sondes ou à divers appareils de mesure ou de contrôle (niveau, température, pression, etc...). Les tubes 21 et 22 peuvent servir à la mise en froid de la cavité. Un gaz froid, par exemple de l'azote, est injecté par le tube 21. La mise en froid peut également être réalisée en utilisant deux puits, un à chaque extrémité de la cavité.

Pendant cette descente de la température (mise en froid), les parois sont surveillées pour observer les fissures éventuelles et prendre des dispositions appropriées pour les colmater. La forme particulière de la cavité selon l'invention réduit considérablement les causes d'initiation de fissures: on élimine en particulier les fissures qui pourraient se former au niveau d'un raccordement anguleux parement/radier.

Quand la température de service est atteinte, on introduit du gaz liquéfié dans la cavité, par exemple par un tube analogue au tube 21. Le niveau du liquide varie avec l'utilisation du gaz. Le liquide est surmonté de gaz à la même température qui est la température d'équilibre liquide/vapeur à la pression de la cavité.

Le terrain est gelé autour de la cavité, et la zone gelée s'étend progressivement autour de la cavité, tant que celle-ci est en service. Eventuellement, en direction de la surface, si la cavité n'est pas située à une grande profondeur, il peut s'établir un profil d'équilibre des températures.

Il va de soi que le mode de réalisation décrit n'est qu'un exemple et qu'il serait possible de le modifier, notamment par substitution d'équivalents techniques, sans sortir pour cela du cadre de l'invention revendiquée.

**Revendications**

1. Procédé de stockage dans une cavité souterraine creusée dans un terrain imprégné d'eau d'un produit à maintenir à une température inférieure à la température de congélation de l'eau imprégnant le terrain, caractérisé en ce que l'on creuse une cavité (10), formée par une galerie droite ou non, dont la section est sensiblement circulaire et les extrémités sensiblement hémisphériques, puis la température est descendue progressivement dans la cavité jusqu'à la température prévue pour le fonctionnement du stockage, puis la cavité reçoit le produit à stocker.

2. Dispositif de stockage dans une cavité souterraine creusée dans un terrain imprégné d'eau d'un produit à maintenir à une température inférieure à la température de congélation de l'eau imprégnant le terrain, caractérisé en ce que la cavité (10) est formée par une galerie droite ou non, de section sensiblement circulaire, et dont les extrémités (11, 12) sont sensiblement hémisphériques.

**Patentansprüche**

1. Verfahren zum Lagern eines Produkts in einem unterirdischen Hohlraum, der in einem mit Wasser imprägnierten Boden ausgehöhlt worden ist, wobei das Produkt bei einer Temperatur unterhalb der Gefriertemperatur des den Boden imprägnierenden Wassers gehalten werden soll, dadurch gekennzeichnet, daß man einen Hohlraum (10) aushöhlt, der durch einen geraden Stollen gebildet ist oder nicht, dessen Querschnitt im wesentlichen kreisförmig und dessen Enden im wesentlichen halbkugelförmig sind, dann die Temperatur im Hohlraum bis zu der für das Funktionieren der Lagerung vorgesehenen Temperatur fortschreitend gesenkt wird, dann der Hohlraum das zu lagernde Produkt aufnimmt.

2. Anordnung zum Lagern eines Produkts in einem unterirdischen Hohlraum, der in einem mit Wasser imprägnierten Boden ausgehöhlt worden ist, wobei das Produkt bei einer Temperatur unterhalb der Gefriertemperatur des den Boden imprägnierenden Wassers gehalten werden soll, dadurch gekennzeichnet, daß der Hohlraum (10) durch einen geraden Stollen gebildet wird oder nicht, mit im wesentlichen kreisförmigem Querschnitt und dessen Enden (11, 12) im wesentlichen halbkugelförmig sind.

**Claims**

1. Method of storing, in an underground cavity dug in ground impregnated with water, of a product to be maintained at a temperature below the freezing point of the water impregnating the ground, characterised in that a cavity (10) is dug, formed by a chamber which is straight or otherwise, of which the section is substantially circular and the ends substantially hemispherical, then the temperature in the cavity is gradually lowered to the temperature at which storage is intended to take place, and the cavity then receives the product to be stored.

2. Arrangement for storage, in an underground cavity dug in water-impregnated ground, of a product to be maintained at a temperature below the freezing temperature of the water impregnating the ground, characterised in that the cavity (10) is formed by a chamber which is straight or otherwise, of substantially circular section, and the ends of which are substantially hemispherical.